# EUROPEAN PATENT SPECIFICATION

(11) **EP 1 737 057 B1**
(45) Date of publication and mention of the grant of the patent: **14.09.2011**
(21) Application number: 04724829.9
(22) Date of filing: 31.03.2004
(51) Int. Cl.: H01M 2/20, H01M 2/30, H01M 2/02

(54) **PROCESS FOR PRODUCING A BATTERY PACK**
PROZESS ZUR HERSTELLUNG EINER BATTERIEANORDNUNG
PROCEDE DE PRODUCTION D'UN ENSEMBLE DE BATTERIES

(43) Date of publication of application: 27.12.2006
(73) Proprietor: NEC Corporation, Minato-ku Tokyo 108-8001 (JP); Fuji Jukogyo Kabushiki Kaisha, Tokyo 160-8316 (JP)
(72) Inventor: HOSOYA, Toshizo, Shinjuku-ku, Tokyo 160-8316 (JP)
(74) Representative: Wenzel & Kalkoff
(86) International application number: PCT/JP2004/004693
(87) International publication number: WO 2005/101546

(56) References cited:
- JP-A- 6 013 064
- JP-A- 61 032 652
- JP-A- 62 131 469
- JP-A- 2002 008 622
- JP-A- 2002 203 524
- JP-A- 2004 031 289
- JP-U- 56 092 362

## Description

### TECHNICAL FIELD

The present invention relates to a method of manufacturing a pack battery.

### BACKGROUND ART

Pack batteries for use as a power supply are commercially available as an array of unit cells whose electrode terminals are connected in series to obtain a required voltage or as an array of unit cells whose electrode terminals are connected in parallel to obtain a required current capacity, based on the rated voltage of the unit cells.

Batteries for use in portable information-intensive communication devices such as cellular phones, notebook personal computers, etc. and portability-oriented small-size electronic devices such as video cameras, card-type electronic calculators, etc. are required to be more lightweight and lower profile. Growing international demand for resource and energy saving efforts to protect the global environment are spurring the development of electric vehicles and hybrid electric vehicles (hereinafter referred to as "electric vehicles") which have a battery for powering a motor. Naturally, the batteries on the electric vehicles are also required to be more lightweight and to have a lower profile for the purposes of improving handling characteristics and mileage per charge.

In an effort to make batteries lighter and thinner to meet the requirements, there has been developed a cell employing a laminated material in the form of a thin sheet which is produced by superposing a metal layer of aluminum, etc. and a thermally fusable resin layer between an adhesive agent layer on an outer cell casing by using adhesive layers (see, for example, JP-A No. 2002-203524). The laminated material is generally of a structure wherein both surfaces of the thin metal layer of aluminum or the like are covered with the thin resin layer, is resistant to acids and alkalis, lightweight, and is pliable.

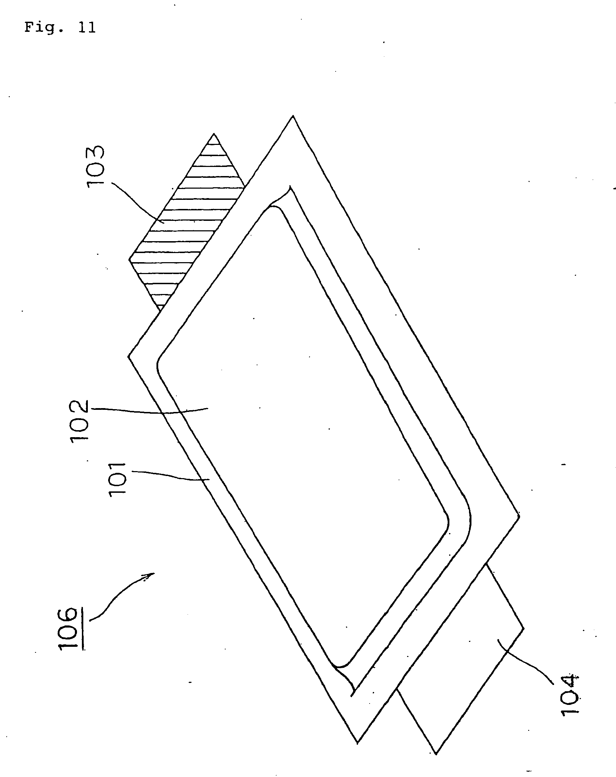

Fig. 11 shows by way of example a conventional flat cell having an outer casing made of a laminated material.

Outer casing 101 made of a laminated material hermetically houses therein electrode group 102 wherein positive electrodes and negative electrodes with separators sandwiched therebetween are stacked, and also hermetically houses electrolytic solution. Positive electrode terminal 103 which is connected to the positive terminals extends from one side of outer casing 101, and negative electrode terminal 104 which is connected to the negative terminals extends from a side of outer casing 101 that is opposite to the side from which positive electrode tab 103 extends. Depending on electric characteristics, positive electrode terminal 103 is substantially made of aluminum, and negative electrode 104 is substantially made of copper or nickel.

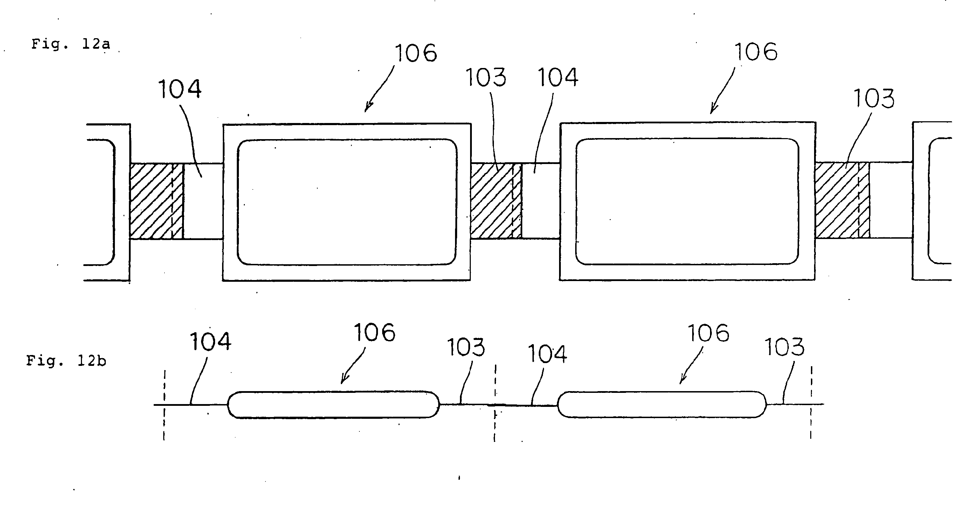

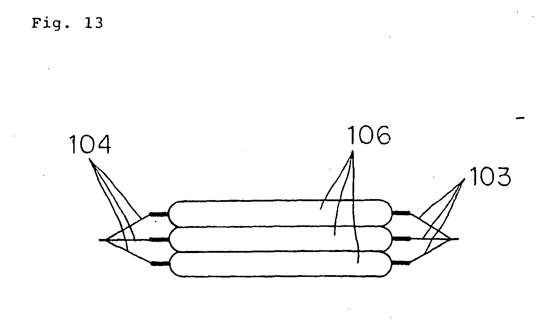

In order to obtain a desired voltage from laminated cells 106, it is necessary to connect unit cells in series as described above. As shown in Figs. 12a and 12b, a plurality of unit cells are arranged in an array, and positive electrode terminal 103 of one unit cell and negative electrode terminal 104 of another unit cell are connected to each other, making up a pack battery. For obtaining a desired current capacity, a plurality of unit cells need to be connected parallel to each other. Therefore, as shown in Fig. 13, laminated cells 106 as a plurality of unit cells are stacked, and positive electrode terminal 103 of one unit cell and negative electrode terminal 104 of another unit cell are connected to each other, making up a pack battery.

In unit cells that are connected in series, the positive electrode terminals and the negative electrode terminals which are made of dissimilar metals are joined to each other. At the joint between dissimilar metals, however, the electrode terminals tend to be corroded due to dew condensation, resulting in increased electric resistance. In particular, electric vehicles require a large current to be discharged for quick starts and accelerations, so that the electrode terminals are repeatedly heated and cooled. Therefore, corrosion of the electrode terminals is accelerated, resulting in a reduction of the service life of the pack battery.

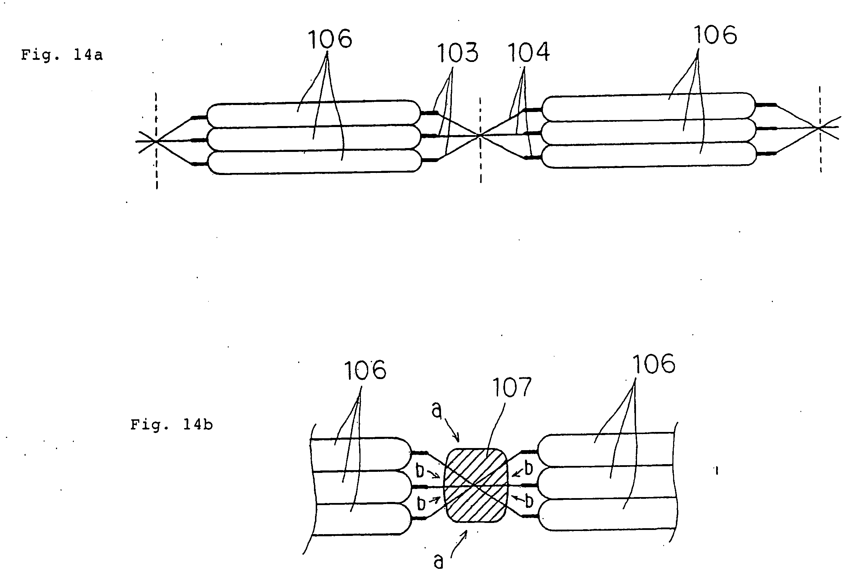

Dew condensation on the joint between dissimilar metals may be prevented by covering the junction with a resin to provide an ambient air isolating structure and a water-resistant, moisture-resistant structure. However, as shown in Fig. 14a, if series-connected pack batteries are connected in parallel for obtaining a desired voltage and a desired current capacity, then, as shown at an enlarged scale in Fig. 14b, the electrode terminals are joined together and thereafter the junction is covered with resin portion 107. In this case, a region "a" is reliably covered with the resin. However, if resin is to be provided between the electrode terminals of the parallel-connected batteries to reliably cover the electrode terminals in regions "b", the amount of resin to fill regions "b" needs to be increased and needs to be applied uniformly and sufficiently to the electrode terminals. Even though the joint between the dissimilar metals incorporates an ambient air isolating structure and a water-resistant, moisture-resistant structure, the electrode terminals are covered with a resin whose coefficient of thermal conductivity is lower than necessary. Consequently, heat generated in chemical reactions occurring when the pack batteries are charged and discharged, and Joule heat generated by the increased electric resistance of the junction is transferred through the electrode terminals, are hardly radiated. Furthermore, the manufacturing process is time-consuming and the pack batteries suffer a weight increase.

### DISCLOSURE OF THE INVENTION

The present invention has been made in view of the above problems. It is an object of the present invention to provide a method of manufacturing a pack battery, which prevent the electrode terminals from being corroded because of condensation at the joint between dissimilar metals.

As method of manufacturing a pack battery according to the present invention, there is provided a method of manufacturing a pack battery having a plurality of electrically connected laminated cells each comprising a stacked electrode assembly of a pole plate of a first polarity and a pole plate of second polarity, and comprising a second electrode terminal made of a material different from the pole plate of first polarity and electrically connected to the pole plate of second polarity, with at least the stacked electrode assembly being covered with an outer casing lamination material which provides an outer cell casing, the method comprising the steps of fabricating a junction terminal by electrically connecting a first connector made of essentially the same material as the pole plate of first polarity and a second connector electrically connected to the first connector and made of essentially the same material as the second electrode terminal at a junction, and hermetically sealing the junction by covering the junction with an electric insulator, fabricating a plurality of laminated unit cells each having a junction terminal by electrically connecting the first connector of the junction terminal and the pole plate of first polarity, and covering at least the stacked electrode assembly with the outer casing lamination material, and electrically connecting the second connector of the junction terminal of a unit cell and the second electrode terminal of another unit cell to each other.

As described above, in the method of manufacturing a series-connected pack battery according to the present invention, a junction between dissimilar metals is hermetically sealed in advance by being covered with an electric insulator such as a resin or the like, thereby producing a junction terminal, before cells are combined into a pack battery. Consequently, the components can be handled with greater ease than if the junction is covered with resin after cells are combined into a pack battery.

The method of manufacturing a pack battery according to the present invention comprises the step of interconnecting the second electrode terminals of the unit cell, the other unit cell and the second connectors thereof. It is thus possible to manufacture a pack battery by parallel-connecting series-connected pack batteries. In the pack battery manufactured by the manufacturing method according to the present invention, a junction between dissimilar metals is hermetically sealed in advance by being covered with an electric insulator such as a resin or the like. Therefore, the pack battery does not need any more than the required amount of resin covering unlike the method of covering parallel-connected junctions with a resin after cells are combined into a pack battery. Consequently, the pack battery has a good radiation performance.

According to the present invention, there is provided a method of manufacturing a pack battery having a plurality of electrically connected laminated cells each comprising a stacked electrode assembly of a pole plate of a first polarity and a pole plate of a second polarity, and a second electrode terminal made of a material different from the pole plate of first polarity and electrically connected to the pole plate of second polarity with at least the stacked electrode assembly being covered with an outer casing lamination material which provides an outer cell casing, the method comprising the steps of fabricating a junction terminal by electrically connecting a first connector made of essentially the same material as the pole plate of first polarity and a second connector electrically connected to the first connector and made of essentially the same material as the second electrode terminal at a junction, and hermetically sealing the junction by covering the junction with an electric insulator, fabricating a plurality of laminated unit cells each having a junction terminal by electrically connecting the first connector of the junction terminal and the pole plate of first polarity, and covering at least the stacked electrode assembly with the outer casing lamination material, and interconnecting the second electrode terminals of the unit cell, the other unit cell and the second connectors thereof.

In the method of manufacturing a pack battery according to the present invention, a junction between dissimilar metals is hermetically sealed in advance by being covered with an electric insulator such as resin or the like, thereby producing a junction terminal, before cells are combined into a pack battery. Then, a pack battery is fabricated. Consequently, the components can be handled with greater ease than if the junction is covered with a resin after cells are combined into a pack battery. In the parallel-connected pack battery manufactured by the manufacturing method according to the present invention, since a junction between dissimilar metals is covered with resin or the like in advance, the pack battery does not need any more than the required amount of resin covering, and the pack battery has a good radiation performance.

According to the present invention, as described above, a pack battery is constructed of unit cells each having a junction terminal in which a junction between a first connector, where dissimilar metals contact each other, and a second connector is hermetically sealed by being covered with an electric insulator such as resin or the like.

According to the present invention, therefore, a portion where dissimilar metals contact each other does not need to be covered with resin after unit cells are combined into a pack battery. According to the present invention, furthermore, the portion where dissimilar metals contact each other can be isolated from ambient air and made resistant to water and moisture without an excessive resin covering. According to the present invention, moreover, since only the required amount of covering needs to be used, the electrodes have a good radiation performance. According to the present invention, consequently, it is possible to manufacture a pack battery which can withstand use for a long period of time.

### BRIEF DESCRIPTION OF THE DRAWINGS

Fig. 1 is a perspective view, partly broken away, of a laminated unit cell according to the present invention;
Fig. 2a is a sectional side elevational view of a junction terminal of the laminated unit cell shown in Fig. 1;
Fig. 2b is a plan view of the junction terminal;
Fig. 3a is a perspective view, partly broken away, of another laminated unit cell according to the present invention;
Fig. 3b is a partial sectional side elevational view showing a structure wherein a connector junction is isolated from a chemical reaction area of the cell;
Fig. 4a is a plan view of a pack battery comprising a plurality of laminated cells according to the present invention;
Fig. 4b is a side elevational view of the pack battery;
Fig. 4c is an enlarged view of a portion A shown in Fig. 4a;
Fig. 4d is an enlarged view of a portion B shown in Fig. 4b;
Fig. 5 is a sectional side elevational view of a pack battery comprising series-connected laminated cells according to the present invention;
Fig. 6 is a sectional side elevational view of a pack battery comprising parallel-connected pack batteries each comprising series-connected laminated cells according to the present invention;
Fig. 7 is a sectional side elevational view of a pack battery comprising parallel-connected laminated cells according to the present invention;
Figs. 8a through 8e are views illustrating respective steps of a method of manufacturing a pack battery comprising series-connected laminated cells according to the present invention;
Fig. 9 is a view illustrating a step of parallel-connecting series-connected pack batteries manufactured by the manufacturing method according to the present invention;
Fig. 10 is a view illustrating a method of manufacturing a pack battery by parallel-connecting laminated cells;
Fig. 11 is a perspective view of a conventional flat cell having an outer casing made of a laminated material;
Fig. 12a is a plan view of an array of series-connected conventional laminated cells;
Fig. 12b is a side elevational view of the array of series-connected conventional laminated cells;
Fig. 13 is a side elevational view of an array of parallel-connected conventional laminated cells;
Fig. 14a is a side elevational view of a pack battery comprising parallel-connected pack batteries each comprising series-connected conventional laminated cells; and
Fig. 14b is an enlarged view of a junction region of the pack battery.

### BEST MODE FOR CARRYING OUT THE INVENTION

Embodiments of the present invention will be described below with reference to the drawings.

Either one of a positive pole and a negative pole will be referred to as a "first" side and the other as a "second" side.

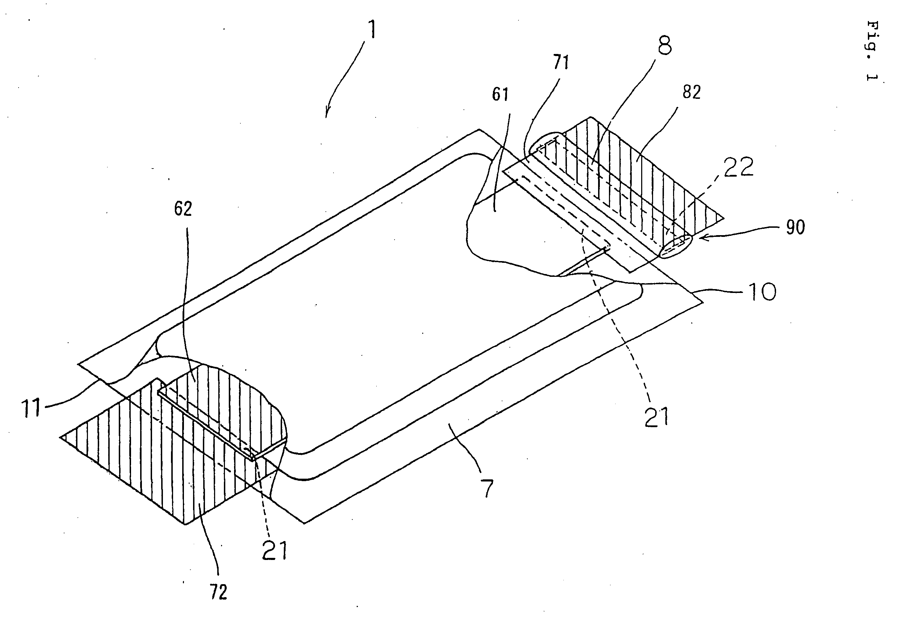

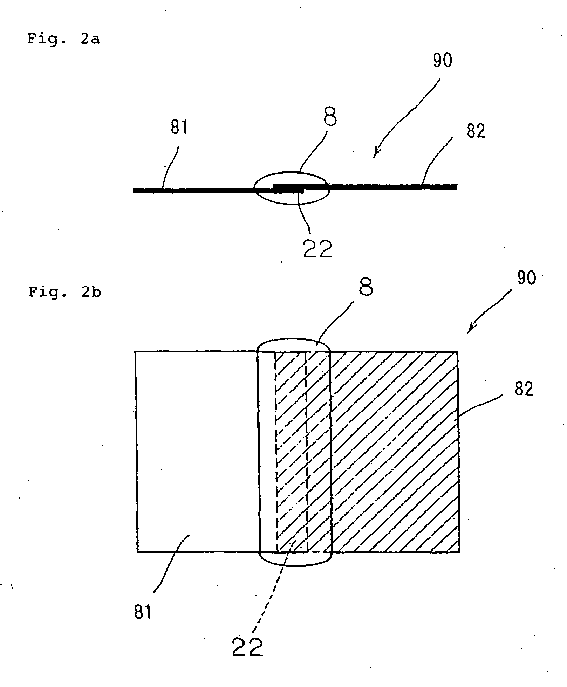

Fig. 1 is a perspective view, partly broken away, of a laminated unit cell according to an embodiment of the present invention, Fig. 2a is a sectional side elevational view of a junction terminal thereof, and Fig. 2b is a plan view of the junction terminal.

In the present embodiment, if junction terminal 90 is considered alone, it comprises first connector 81 and second connector 82 which are joined to each other. Laminated cell 1 has a first electrode terminal 71 which is of the same type of metal as first connector 81. If junction terminal 90 is considered as being connected to laminated cell 1, then first electrode terminal 71 of laminated cell 1 functions as first connector 81 of junction terminal 90. In the description which follows, junction terminal 90 is shown as having first electrode terminal 71 connected to second connector 82 in Fig. 1 and as having first connector 81 connected to second connector 81 in Figs. 2a, 2b, etc. Junction terminal 90 in all of these structures has the same function.

Laminated cell 1 has a structure wherein a stacked electrode assembly, comprising pole plate 61 of first polarity and pole plate 62 of second polarity, which are stacked together with a separator, not shown, interposed therebetween, is sealed by lamination sheets 7 (the dimensions of the lamination sheets: 120 mm in the longitudinal direction and 75 mm in the transverse direction) which each comprise a metal film of aluminum or the like and a thermally fusable resin layer which are superposed one on the other.

First electrode terminal 71 is electrically connected to pole plate 61 of a first polarity. Second connector 82 (junction terminal portion) which is of essentially the same material as second electrode terminal 72 is electrically connected to first electrode terminal 71. Connector junction 22 which provides an electric junction surface between first electrode terminal 71 and second connector 82 (junction terminal portion) is hermetically sealed by being covered with covering resin 8 as an electric insulator. Stated otherwise, junction terminal 90 that has a unitary structure, wherein connector junction 22 between first electrode terminal 71 and second connector 82 is covered with covering resin 8, is connected to pole plate 61 of first polarity.

Second electrode terminal 72 is electrically connected to pole plate 62 of a second polarity.

Covering resin 8 may be made of any material insofar as it is electrically nonconductive and is capable of hermetically sealing connector junction 22.

Pole plate 61 of first polarity and pole plate 62 of second polarity are made of different materials. For example, pole plate 61 of first polarity is made of a thin film of aluminum, and pole plate 62 of second polarity is made of a thin film of copper. First electrode terminal 71 is made of aluminum (thickness: 15 µm) which is the same as the material of pole plate 61 of first polarity. Therefore, first electrode terminal 71 and pole plate 61 of first polarity are firmly joined to each other by terminal junction 21. Similarly, since second electrode terminal 72 is made of copper (thickness: 10 µm) which is the same as the material of pole plate 62 of second polarity, they are firmly joined to each other by terminal junction 21.

As described above, second connector 82 of junction terminal 90 is made of the same material as second electrode terminal 72 (in Fig. 1, pole plate 62 of second polarity, second electrode terminal 72, and second connector 82, which are shown hatched, are made of the same material). Therefore, in junction terminal 90, second connector 82, which is of a material different from first electrode terminal 71, is electrically connected to first electrode terminal 71. Connector junction 22, wherein dissimilar metals are held in contact with each other, is prone to become corroded. According to the present embodiment, however, connector junction 22 will not be corroded as it is isolated from ambient air and is made resistant to water and moisture by covering resin 8.

A method of manufacturing laminated cell 1 as a single cell will be briefly described below.

First, junction terminal 90 is preliminarily prepared before it is joined to pole plate 61 of first polarity. Specifically, first connector 81, functioning as first electrode terminal 71, and second connector 82 are joined to each other by connector junction 22, after which connector junction 22 is covered with covering resin 8, thereby producing junction terminal 90. Then, in order to allow first connector 81 of junction terminal 90 thus fabricated to function as first electrode terminal 71, first connector 81 is joined to pole plate 61 of first polarity by terminal junction 21.

Second electrode terminal 72 is also connected to pole plate 62 of second polarity by terminal junction 21. These electrodes, terminals, and connectors are joined together by inter-metal joining (ultrasonic joining), laser welding, alloy welding, or the like.

According to the present embodiment, since the process of covering a contact between dissimilar metals with covering resin 8 can be performed on junction terminal 90 alone, the efficiency is better than if a contact between dissimilar metals is covered with a resin after the contact is joined to a stacked electrode assembly.

The stacked electrode assembly, wherein junction terminal 90 is joined to pole plate 61 of first polarity and second electrode terminal 72 is joined to pole plate 62 of second polarity, is sandwiched between two lamination sheets 7 placed on both respective surfaces of the stacked electrode assembly. Then, the four sides of lamination sheets 7 are thermally fused to seal the stacked electrode assembly.

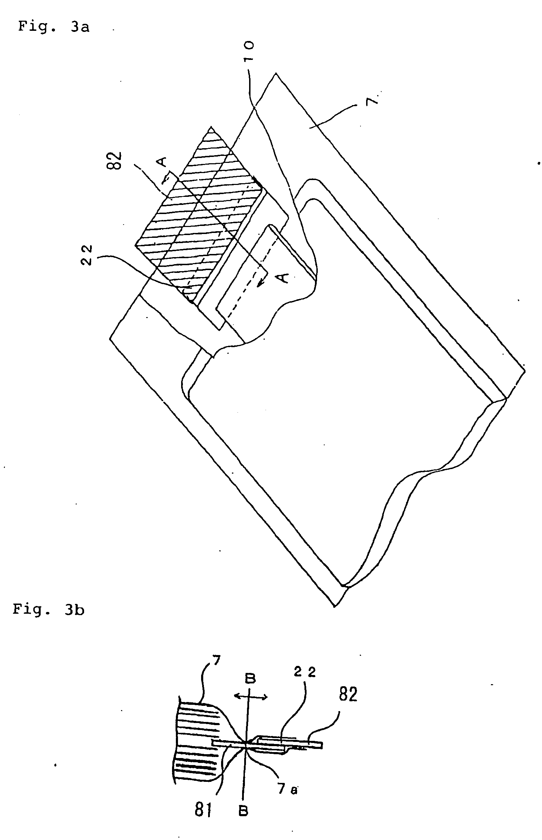

Two lamination sheets 7 may be thermally fused as follows: Longitudinal edges of lamination sheets 7 are thermally fused to provide a tubular body. After the stacked electrode assembly is inserted into the tubular body, the tubular body is pressed into a thin flat body. Thereafter, lamination sheets 7 have first side 10 and second side 11 thermally fused. In the example shown in Fig. 1, connector joint 22 of junction terminal 90 is covered with covering resin 8 and hence is not sealed by lamination sheets 7. However, the present invention is not limited to such a structure. As shown in Fig. 3a and Fig. 3b which is a cross-sectional view taken along line A-A of Fig. 3a, connector joint 22 which is not covered with covering resin 8 may be sealed by lamination sheets 2. According to such a modification, connector joint 22 is isolated from a chemical reaction area of the cell by sealed region 7a of lamination sheets 2, i.e., at line B - B of Fig. 3b.

Connector joint 22 shown in Figs. 3a and 3b is not covered with covering resin 8. However, connector joint 22 may be covered with covering resin 8 and may also be covered with lamination sheets 7. According to such a modification, the amount of resin may be smaller than with the type wherein the portion covered with covering resin 8, shown in Fig. 1, is exposed out of lamination sheets 7.

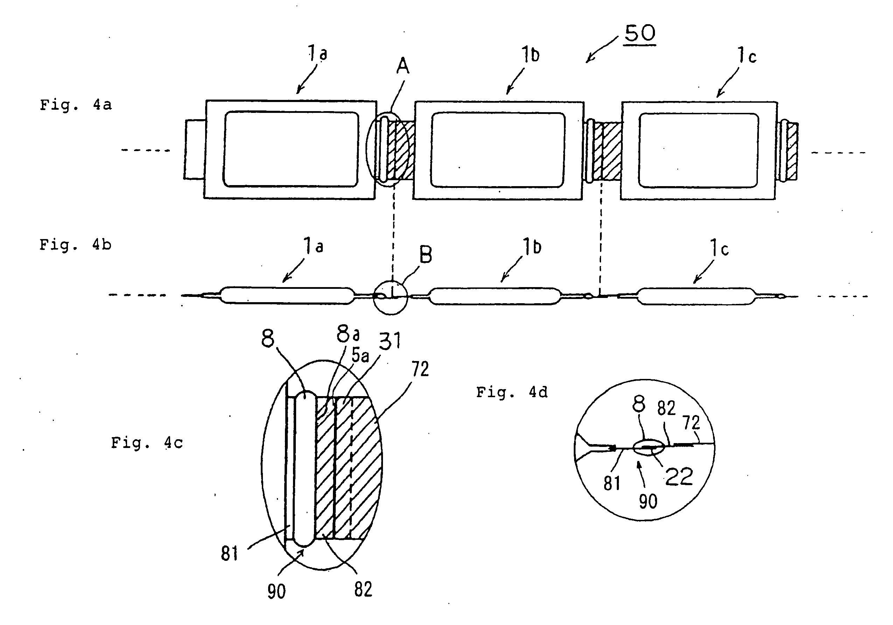

A method of manufacturing a pack battery comprising unit cells each in the form of laminated cell 1 according to the present embodiment will briefly be described below with reference to Figs. 4a through 4d. Fig. 4a is a plan view of a pack battery comprising unit cells 1 a, 1 b, 1 c which are connected in series, Fig. 4b is a side elevational view of the pack battery, Fig. 4c is an enlarged view of portion A shown in Fig. 4a, and Fig. 4d is an enlarged view of portion B shown in Fig. 4b. In Figs. 4a through 4d, only three unit cells 1a, 1 b, 1 c are illustrated.

First, joining unit cell 1 a and unit cell 1 b will be described below.

For joining second connector 82 of junction terminal 90 of unit cell 1a and second electrode terminal 72 of unit cell 1 b to each other, joint surfaces 31 between second connector 82 and second electrode terminal 72 are maintained and second connector 82 and second electrode terminal 72 are positioned so that end side 8a of covering resin 8 and end side 5a of second electrode terminal 72 will not interfere with each other. Thereafter, joint surfaces 31 are joined to each other by laser welding or the like. Since second connector 82 and second electrode terminal 72 are made of the same material, they do not need to be isolated from ambient air and made resistant to water and moisture. Then, second connector 82 of junction terminal 90 of unit cell 1 b and second electrode terminal 72 of unit cell 1 c are similarly joined to each other.

As described above, according to the present invention, since connector joint 22 of junction terminal 90, which is a contact between dissimilar metals, has already been covered with covering resin 8 in the step of fabricating junction terminal 90, there is no step of covering the metal terminals with a resin after pack battery 50 is produced. Therefore, the efficiency is increased.

For fabricating a pack battery by parallel-connecting series-connected pack batteries 50, no step of covering the metal terminals with a resin is required.

Therefore, the problems to be solved heretofore which are caused when the contact between dissimilar metals is covered with a resin after batteries are parallel-connected, i.e., an insufficient covering on a contact between dissimilar metals, and radiation performance degradation and weight increase due to excessive resin covering added to avoid insufficient covering, do not occur according to the present embodiment.

In pack battery 50 thus produced, connector junction 22, where dissimilar metals contact each other, have already been isolated from ambient air and made resistant to water and moisture by covering resin 8 before the production of pack battery 50. In pack battery 50, the areas that are covered with covering resin 8 in the joining between cells are connector junctions 22 only, and the other areas are exposed to ambient air. Consequently, pack battery 50 has a good radiation performance for the heat generated in chemical reactions that occur when the pack battery is charged and discharged and for the Joule heat generated by the increased electric resistance of the junction that is alloyed and joined.

As described above, since laminated cell 1 has junction terminal 90 wherein the portion in which dissimilar metals are held in contact with each other is covered with a resin in advance, junction terminal 90 is reliably isolated from ambient air and made resistant to water and moisture, and has a good radiation performance. Laminated cell 1 allows a pack battery which can withstand use for a long period of time to be manufactured at a low cost.

Examples of connections of pack batteries according to the present invention will be described below. In each of the figures described below, terminal connections are indicated by black dots and broken lines, which do not indicate other connecting members interposed between the terminals, but simply schematically show connected states.

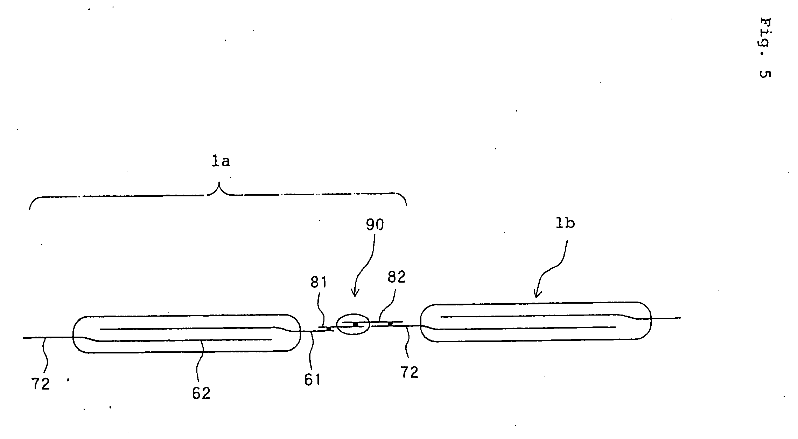

An example of the connection relationship of a pack battery according to the present embodiment is shown in Fig. 5.

The pack battery according to the present embodiment comprises a plurality of electrically connected laminated cells each having a stacked electrode assembly which comprises at least pole plate 61 of a first polarity and pole plate 62 of a second polarity and which is covered with lamination sheets 7 serving as an outer cell casing. Unit cell 1a of the pack battery has first connector 81 of junction terminal 90 electrically connected to pole plate 61 of first polarity. Thus, junction terminal 90 is constructed as part of unit cell 1a. Unit cell 1a has second connector 82 (since junction terminal 90 is connected to unit cell 1a, second connector 82 belongs to unit cell 1a) electrically connected to second electrode terminal 72 of another unit cell 1b.

In the above pack battery, because unit cells 1a, 1b, wherein junction terminal 90 serves as a component, are connected in series to each other, second connector 82 and second electrode terminal 72, which are of essentially the same material, are electrically connected to each other. Therefore, a junction between dissimilar metals can be avoided between unit cells 1a, 1b. Therefore, resin covering or the like is not required in the junction between unit cells 1a, 1b.

The structure shown in Fig. 5 and the structure shown in Figs. 4a, 4b differ from each other as to whether the junction between pole plate 61 of first polarity and first connector 81 of junction terminal 90 is positioned outside or within lamination films 7, are basically the same as each other.

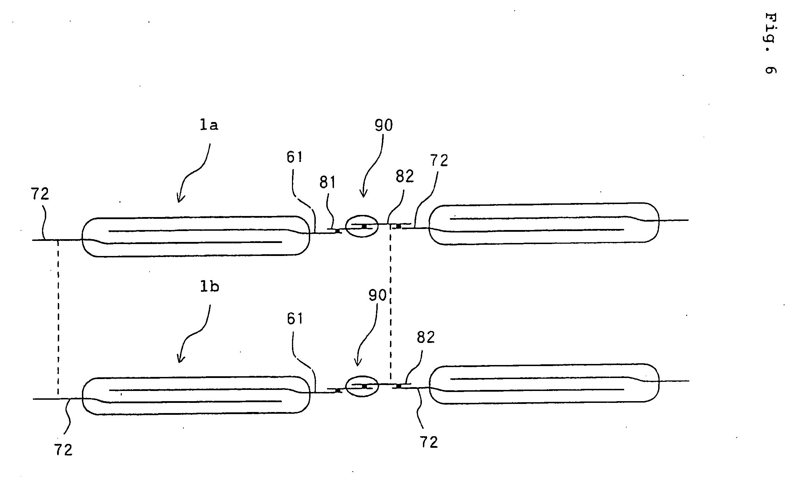

The present invention is also applicable to a pack battery comprising parallel-connected pack batteries each comprising series-connected laminated cells, as shown in Fig. 6. Specifically, series-connected pack batteries can be connected into parallel-connected pack batteries by electrically interconnecting second connectors 82 of unit cell 1a and another unit cell 1b (as shown in Fig. 6, the other unit cell 1b is not a unit cell directly connected to unit cell 1a, but refers to a unit cell of another pack battery) and also by electrically interconnecting second electrode terminals 72 to each other. (Second connectors 82 are electrically connected to pole plates 61 of first polarity through first connectors 81.)

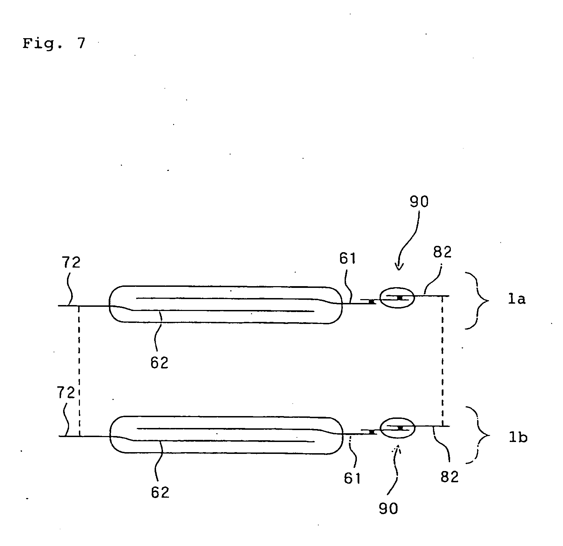

The present invention is also applicable to a parallel-connected pack battery comprising unit cells connected parallel to each other and having junction terminals 90 as components, as shown in Fig. 7. Specifically, the parallel-connected pack battery is constructed by electrically interconnecting second connectors 82 of unit cell 1a and another unit cell 1b and also by electrically interconnecting second electrodes 72.

Each of the above examples is concerned with a structure wherein junction terminals 90 are preassembled as cell components, i.e., each cell has junction terminal 90. Each of the examples to be described below is concerned with a method of manufacturing a pack battery by preparing junction terminal 90 separately and using it to connect cells.

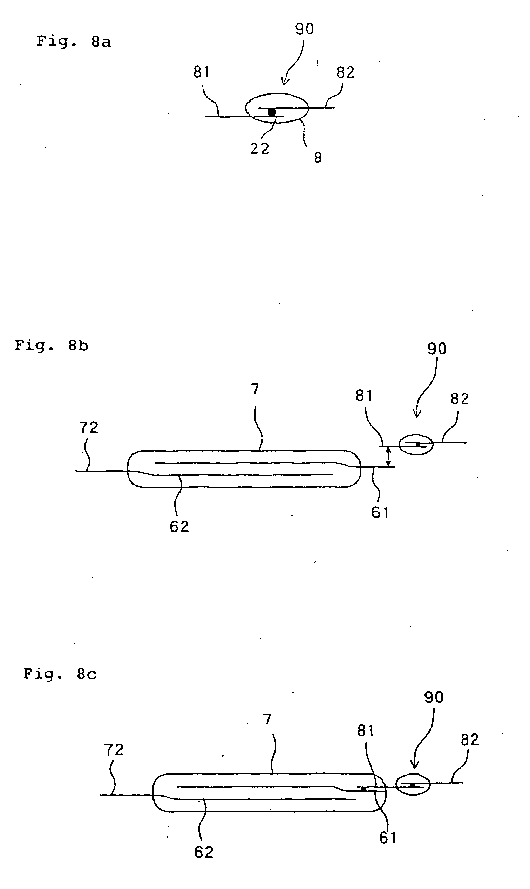

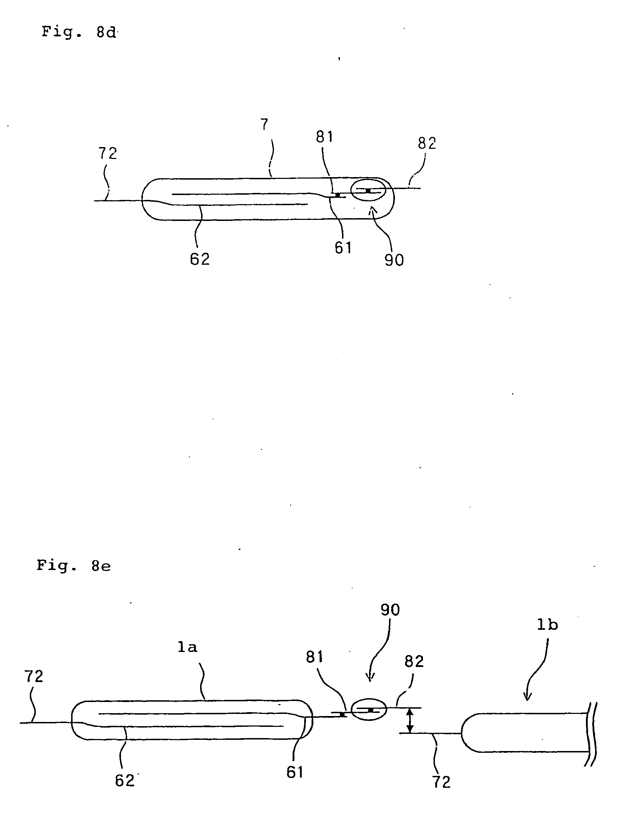

Figs. 8a through 8e show a method of manufacturing a pack battery constructed of a plurality of electrically connected laminated cells 1 each having a stacked electrode assembly comprising pole plate 61 of first polarity and pole plate 62 of second polarity which are stacked together, and second electrode terminal 72 made of a material different from pole plate 61 of first polarity and electrically connected to pole plate 62 of second polarity, with at least the stacked electrode assembly being covered with lamination sheets 7 which provide an outer cell casing.

First, as shown in Fig. 8a, first connector 81 made of essentially the same material as pole plate 61 of first polarity, and second connector 82 made of essentially the same material as second electrode terminal 72, are electrically connected to each other by connector junction 22, and connector junction 22 is hermetically sealed by being covered with covering resin 8, thus producing junction terminal 90.

Then, first connector 81 of junction terminal 90 and pole plate 61 of first polarity are electrically connected to each other, and at least the stacked electrode assembly is covered with lamination sheets 7. In this manner, a plurality of unit cells each having junction terminal 90 are fabricated. Lamination sheets 7 may not cover junction terminal 90 as shown in Fig. 8b. Alternatively, as shown in Fig. 8c, a region where first connector 81 and pole plate 61 of first polarity are joined to each other may be covered. The structure shown in Fig. 8c is the same as the structure shown in Fig. 1. Further alternatively, as shown in Fig. 8d, lamination sheets 7 may cover connector junction 22 of junction terminal 90.

Second connector 82 of junction terminal 90 of unit cell 1 a thus produced is electrically connected to second electrode terminal 72 of another unit cell 1b.

According to the above manufacturing method, a series-connected pack battery is fabricated after a junction between dissimilar metals has been hermetically sealed by being covered with e.g. covering resin 8 thereby producing junction terminal 90, before cells are combined into a pack battery. Consequently, the components can be handled with greater ease than if the junction is covered with a resin after cells are combined into a pack battery.

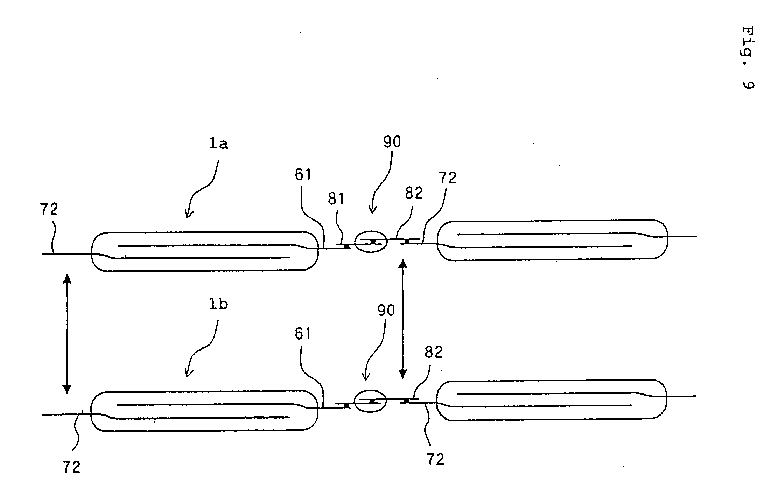

As shown in Fig.9, the method of manufacturing a pack battery according to the present invention may include the step of joining second electrode terminals 72 of unit cell 1a to each other and second connectors 82 of unit cell 1b to each other, thereby manufacturing a pack battery by parallel-connecting series-connected pack batteries that are fabricated as described above. The pack battery manufactured by the manufacturing method according to the present embodiment has a better radiation performance because the junction between dissimilar metals has been hermetically sealed by being covered with e.g. covering resin 8 in advance before cells are combined into a pack battery, and hence the pack battery does not need any more than the required amount of resin covering unlike the method of covering parallel-connected junctions with a resin after cells are combined into a pack battery.

A method of manufacturing a parallel-connected pack battery comprising unit cells connected parallel to each other and having junction terminals 90 as components according to the present embodiment is as follows:

First connector 81 made of essentially the same material as pole plate 61 of first polarity and second connector 82 made of essentially the same material as second electrode terminal 72 are electrically connected to each other by a junction, and the junction is hermetically sealed by being covered with covering resin 8, thus producing junction terminal 90 (see Fig. 8b).

Then, first connector 81 of junction terminal 90 and pole plate 61 of first polarity are electrically connected to each other, and at least the stacked electrode assembly is covered with lamination sheets 7, thereby fabricating a plurality of unit cells each having a junction terminal 90.

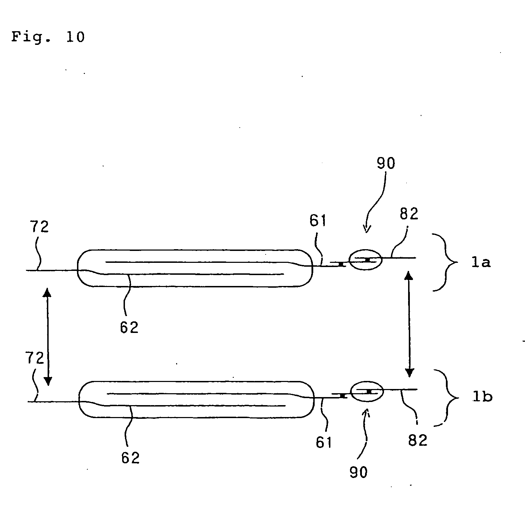

Then, as shown in Fig. 10, second electrodes 72 and second connectors 82 of unit cell 1a and other unit cell 1b are connected to each other.

As described above, since junction terminal 90 is prefabricated before cells are combined into a pack assembly and then a parallel-connected pack battery is produced, the components can be handled with greater ease than if the junction is covered with resin after cells are combined into a pack battery. Furthermore, the parallel-connected pack battery manufactured by the manufacturing method according to the present embodiment has no more than the required amount of resin covering and has a better radiation performance because the junction between dissimilar metals has been covered with resin or the like in advance.

The cell to which the present invention pertains is not limited to any types insofar as it can be shaped as a flat cell and can be covered with laminations. However, a manganese lithium-ion secondary cell, for example, is preferable.

The numerical values, materials, etc. referred to in the description of the present embodiment are given by way of example only, and should not be regarded as imposing any limitation.

## Claims

1. A method of manufacturing a pack battery having a plurality of electrically connected laminated cells each comprising a stacked electrode assembly of a pole plate of first polarity and a pole plate of second polarity, and a second electrode terminal made of a material different from said pole plate of first polarity and electrically connected to the pole plate of second polarity, with at least said stacked electrode assembly being covered with an outer casing lamination material which provides an outer cell casing, said method comprising the steps of:
fabricating a junction terminal by electrically connecting a first connector made of essentially the same material as said pole plate of first polarity and a second connector electrically connected to said first connector and made of essentially the same material as said second electrode terminal at a junction, and hermetically sealing said junction by covering the junction with an electric insulator;
fabricating a plurality of laminated unit cells each having said junction terminal by electrically connecting said first connector of said junction terminal and said pole plate of first polarity, and covering at least said stacked electrode assembly with said outer casing lamination material; and
electrically connecting said second connector of said junction terminal of a unit cell and said second electrode terminal of said other unit cell to each other.

2. The method according to claim 1, comprising the step of:
interconnecting said second electrode terminals of said unit cell and said other unit cell, and interconnecting said second connectors thereof, to each other.

## Patentansprüche

1. Verfahren zum Herstellen einer Batterieanordnung mit einer Mehrzahl elektrisch verbundener laminierter Zellen, die jeweils eine gestapelte Elektrodenanordnung aus einer Polplatte einer ersten Polarität und einer Polplatte einer zweiten Polarität und einen zweiten Elektrodenanschluss umfassen, der aus einem Material hergestellt ist, das unterschiedlich von der Polplatte der ersten Polarität ist und mit der Polplatte der zweiten Polarität elektrisch verbunden ist, wobei mindestens die gestapelte Elektrodenanordnung mit einem äußeren Gehäuselaminierungsmaterial bedeckt ist, das ein äußeres Zellengehäuse vorsieht, wobei das Verfahren folgende Schritte umfasst:
Herstellen eines Übergangsanschlusses durch elektrisches Verbinden eines ersten Verbindungsteils, das im Wesentlichen aus dem gleichen Material hergestellt ist wie die Polplatte der ersten Polarität, und eines zweiten Verbindungsteils, das elektrisch mit dem ersten Verbindungsteil verbunden ist und im Wesentlichen aus dem gleichen Material hergestellt ist wie der zweite Elektrodenanschluss an einem Übergang, und hermetisches Abdichten des Übergangs durch Bedecken des Übergangs mit einem elektrischen Isolator,
Herstellen einer Mehrzahl laminierter Einheitszellen, die jeweils den Übergangsanschluss aufweisen, durch elektrisches Verbinden des ersten Verbindungsteils des Übergangsanschlusses mit der Polplatte der ersten Polarität und Bedecken mindestens der gestapelten Elektrodenanordnung mit dem äußeren Gehäuselaminierungsmaterial; und
elektrisches Verbinden des zweiten Verbindungsteils des Übergangsanschlusses einer Einheitszelle und des zweiten Elektrodenanschlusses der anderen Einheitszelle miteinander.

2. Verfahren nach Anspruch 1, umfassend den folgenden Schritt:
Verbinden der zweiten Elektrodenanschlüsse der Einheitszelle und der anderen Einheitszelle miteinander und Verbinden der zweiten Anschlussteile davon.

## Revendications

1. Procédé de fabrication d'un ensemble de batteries ayant une pluralité de cellules laminées connectées électriquement, chacune comprenant un ensemble d'électrodes empilées d'une plaque de pôle d'une première polarité et d'une plaque de pôle d'une deuxième polarité et une deuxième borne d'électrode faite d'une matière différente de ladite plaque de pôle de première polarité et reliée électriquement à la plaque de pôle de deuxième polarité, avec au moins ledit ensemble d'électrodes empilées étant recouvert d'une matière stratifiée de carter externe qui fournit un carter de cellule externe, ledit procédé comprenant les étapes de :
fabrication d'une borne de jonction en reliant électriquement un premier connecteur fait essentiellement de la même matière que ladite plaque de pôle de première polarité et un deuxième connecteur relié électriquement audit premier connecteur et fait essentiellement de la même matière que ladite deuxième borne d'électrode à une jonction, et scellant hermétiquement ladite jonction en recouvrant la jonction d'un isolant électrique ;
fabrication d'une pluralité de cellules élémentaires laminées ayant chacune ladite borne de jonction en reliant électriquement ledit premier connecteur de ladite borne de jonction et ladite plaque de pôle de première polarité, et en recouvrant au moins ledit ensemble d'électrodes empilées avec ladite matière stratifiée du carter extérieur ; et
liaison électrique dudit deuxième connecteur de ladite borne de jonction d'une cellule élémentaire et de ladite deuxième borne d'électrode de ladite autre cellule élémentaire l'un à l'autre.

2. Procédé selon la revendication 1, comprenant l'étape :
d'interconnexion desdites deuxièmes bornes d'électrode de ladite cellule élémentaire et de ladite autre cellule élémentaire, et d'interconnexion desdits deuxièmes connecteurs de celles-ci l'un à l'autre.
